# EUROPEAN PATENT SPECIFICATION

(11) **EP 3 645 483 B1**
(45) Date of publication and mention of the grant of the patent: **23.09.2026**
(21) Application number: 17749213.9
(22) Date of filing: 28.06.2017
(51) Int. Cl.: C05G 3/00, B01J 2/10

(54) **METHOD FOR PRODUCING OF GRANULATED MINERAL AND ORGANIC FERTILIZERS, EQUIPMENT FOR IMPLEMENTING SAME AND OBTAINED FERTILIZER**
VERFAHREN ZUR HERSTELLUNG VON GRANULIERTEN MINERALISCHEN UND ORGANISCHEN DÜNGEMITTELN, VORRICHTUNG ZUR DURCHFÜHRUNG DES VERFAHRENS UND ERHALTENES DÜNGEMITTEL
PROCÉDÉ DE PRODUCTION D'ENGRAIS MINÉRAUX ET ORGANIQUES GRANULÉS, ÉQUIPEMENT DE MISE EN OEUVRE DU PROCÉDÉ ET ENGRAIS OBTENU

(43) Date of publication of application: 06.05.2020
(73) Proprietor: Niles agro OÜ, 74114 Maardu, Harju Maakond (EE)
(72) Inventor: KOPÕRIN, Nikolai, 74114 Maardu, Harju Maakond (EE)
(74) Representative: AAA Patendibüroo OÜ
(86) International application number: PCT/IB2017/000847
(87) International publication number: WO 2019/002899

(56) References cited:
- GB-A- 1 263 719
- GB-A- 677 077
- JP-A- S6 349 238
- US-A- 3 617 237

## Description

### Technical field

The invention belongs to the field of agriculture and plant cultivation and relates to a technology for producing granulated mineral and organic fertilizers.

### State of the art

EP1411036 discloses a method for obtaining nitrogenated granular fertilizers with a high microelement content. US 3 617 237 A discloses a method for producing granulated fertilizers where powdered humic substances have been extracted from peat, inorganic powder fertilizer comprising nitrogen, phosphorus, potassium, magnesium and other micronutrients are added to the humic substances, water is added by means of spray.

GB 1 263 719 A discloses granular fertilizers prepared by tumbling a mixture comprising ammonium phosphate, urea and a potassium salt in presence of water.

GB 677 077 discloses granular fertilizer and a process for the production.

A weak point of the technologies for producing fertilizers known from the state of the art is the great energy intensity of these technologies.

### Summary of the invention

The method according to this invention enables the production of granulated organic and mineral fertilizers without using nitrogen.

Less thermal and electric energy is used with the method of this invention, and up to five times more energy is saved compared to other technologies and other factories engaged in the production of fertilizers. The device of the invention minimises the amount of manufacturing waste produced; it keeps the production ecologically clean; any air pollution is ruled out.

Minimal energy use is of key importance when it comes to the cost-effectiveness of producing granulated organic and traditional mineral fertilizers.

Alternative sources of heat, such as solar energy, peat, wood in pelleted form, etc. can be used with the device of this invention. These are ecologically clean, safe, and also financially attractive sources of energy.

The technology allows the user to give organic as well as traditional mineral fertilizers optimal agrophysical and agrochemical properties so that such fertilizers can be used in all fertilizer spreaders; such fertilizers also maintain their optimal properties when mixed in soil, maximally satisfying the nutrient needs of plants.

The method of the invention includes the following stages:
- The raw material components of a fertilizer are transported from wagons and cars to a belt conveyor, which is used to feed the raw materials to dispensing devices.
- In the dispensing devices, the components are dispensed according to a predetermined recipe and depending on whether organic fertilizers of mineral fertilizers are produced.
- The dispensed and mixed components are carried to a grinder by means of a belt conveyor, where the components are ground.
- The ground components are delivered to a mixing machine for mixing the raw materials.
- Liquid components, including component fixatives, are added to the fertilizer components in the mixing machine via a humidifier (in the form of a sprayer) and pump dispenser.
- The components in the mixing machine are aerated by a spiral in the middle of the the mixing machine wherein the spiral having an axial, straight part in the the centre which has airholes in it for aerating.
- The mix is transported to granulators by means of a belt conveyor, where the fed pressurised fertilizer mix is crushed, granulated, and solidified.
- The granules are transported to a rotary screen in which granules of predetermined dimensions are screened, and the remaining granules are guided back to the mixing machine by means of a belt conveyor.
- Granules of a predetermined size are transported to a granule rounding machine, where the granules are rounded to predetermined dimensions, and all granules that do not meet these dimensions are returned to the granulators or mixing machine by means of a belt conveyor.
- The fertilizer raw materials are transported to a drier from the rounding machine, where the raw materials are dried at temperatures between 50 and 100 °C depending on the fertilizer components used.
- When dry, the granules are transported to a vibrating screen by means of a belt conveyor; granules of different diameters are screened, and any granules whose diameter differs from the predetermined diameter are returned by means of a belt conveyor.
- Granules of different predetermined diameters are transported to a packaging machine to be packaged as finished fertilizers.

Two types of fertilizers can be produced by using the method and device of the invention: organic fertilizers (option I) and mineral fertilizers (option II).

A device for producing organic and mineral fertilizers specifically designed for the method is used for the implementation of the method of the invention. The device consists of different parts that are preferably interconnected by means of a belt conveyor and are designed for implementing the stages of the method: raw material hoppers with dispensing scales, a raw material grinder, or mill, a mixing machine for mixing the raw material, a humidifier, a pump dispenser (feeder), granulators (18 units in a preferred embodiment), a rotary screen, a pellet rounding machine, a drying cylinder, a vibrating screen, a return conveyor, a packing machine. The mixing machine (6) contains a total of four spirals:
a) three rotating spirals with the same increment, and b) one spiral in the middle of the mixing machine, wherein the said spiral in the middle has an axial, straight part (9), which axial straight part (9) has airholes (10) in it for aerating the fertilizer components.

### List of drawings

The preferred embodiments of the method of the invention are described by referring to the attached figures. The figures depict the following:
FIG 1 is the preferred embodiment of the device required for the implementation of the method.
FIG 2 is the central spiral of the mixing machine.
FIG 3 is the middle part of the central spiral of the mixing machine.

### Example embodiment of the method and device of the invention

The raw material components of a fertilizer are loaded from wagons, cars or other means of transport onto a belt conveyor, which will transport the raw material to a raw material hopper that is equipped with dispensing scales; the components are dispensed from the hopper according to a suitable recipe. The recipes can be changed depending on the components used.

The production technology is designed for the production of two kinds of fertilizers:
- production of granulated organic fertilizers (option I);
- production of mineral fertilizers (option II).

### Two options for dispensing components

| Option I: granulated organic fertilizer | Option II: traditional mineral fertilizer |
|---|---|
| Phosphate flour: 1-96% | Ammonium nitrate AN: 1-96% |
| Magnesium oxide: 1-96% | Monoammonium phosphate MAP: 1-96% |
| Magnesite: 1-96% | Diammonium phosphate DAP: 1-96% |
| Bischofit: 1-60% | Carbamide (urea): 1-96% |
| Potassium sulphate: 1-96% | Diammonium phosphate NPK: 1-96% |
| Water: 5-50 litres per ton | Sulphate monoammonium phosphate NP + S: 1-96% |

Granulated mineral and organic fertilizers are produced according to any recipe using the components listed in the table (phosphate flour/magnesium oxide, phosphate flour/magnesium oxide/potassium sulphate with different mass percentages + other microelements).

In the dispensing devices, the components are dosed according to a predetermined recipe and depending on whether organic fertilizers or mineral fertilizers are produced. The dispensed and mixed components are carried to a grinder by means of a belt conveyor, where the components are ground. The ground components are delivered to a mixing machine for mixing the raw materials. Liquid components, including component fixatives, are added to the fertilizer components in the mixing machine via a humidifier (in the form of a sprayer) and pump dispenser. The components in the mixing machine are also aerated. Potassium chloride (1-70%) or potassium sulphate (1-70%) is dissolved for mixing the components, and calcium (1-70%) is added according to the recipe. The mix is transported to granulators by means of a belt conveyor, where the pressurised fertilizer mix is crushed, granulated, and solidified. The granules are then transported to a rotary screen in which granules of predetermined dimensions are screened, and the remaining granules are guided back to the mixing machine by means of a return conveyor. Granules of a predetermined size are transported to a granule rounding machine from the rotary screen, where the granules are rounded to predetermined dimensions, and all granules that do not meet these dimensions are returned to the granulators or mixing machine by means of a return conveyor. The fertilizer raw materials are transported to a drier from the rounding machine, where the raw materials are dried at temperatures between 50 and 100 °C depending on the fertilizer components used. When dry, the granules are transported to a vibrating screen by means of a belt conveyor; granules of different diameters are sieved, and any granules whose diameter differs from the predetermined diameter are returned to the granulators or mixing machine by means of a belt conveyor. Granules of different predetermined diameters are transported to a packing machine from the screen, where the finished fertilizer is packed.

### Formulas of fertilizers of the invention

A granulated organic fertilizer which contains the following amounts of phosphate flour Ca(PO₄)₂, potassium sulphate (K₂SO₄), magnesium oxide (MgO), plant-growing peat, magnesite MgCO₃, bischofit MgCl₂ × 6H₂O (in mass percentages):
phosphate flour Ca (PO₄)₂: 1-95%
potassium sulphate K₂SO₄: 1-60%
magnesium oxide MgO: 1-96%
plant-growing peat: 1-60%
magnesite MgCO₃: 1-96%
bischofit MgCl₂ × 6H₂O: 1-60%
water H₂O: 5-50 l

An organic fertilizer thus produced contains up to 5% phosphorus, up to 7% potassium, and additionally microelements (N/P₂O₅/K₂O) 0/5/7.

For example:
A phosphorus/potassium/magnesium fertilizer (40/30/30%)
A potassium/magnesium fertilizer (50/50% or 75/25% or 70/30%)
A magnesium/phosphorus fertilizer (30/70% or 50/50% or 50/75% or 70/30%)

### Values of granulated organic fertilizers

| | |
|---|---|
| Hygroscopic point (humidity balance point) at +25 °C | 50-54% |
| Moisture content by implementing the drying method referred to (moisture) | 0.7-1.0% |
| Total production capacity, t/m³ | 0.99-1 t/m³ |
| Volume weight (bulk density), t/m³ | 0.98 t/m³ |
| | |

### Description of the device of the invention

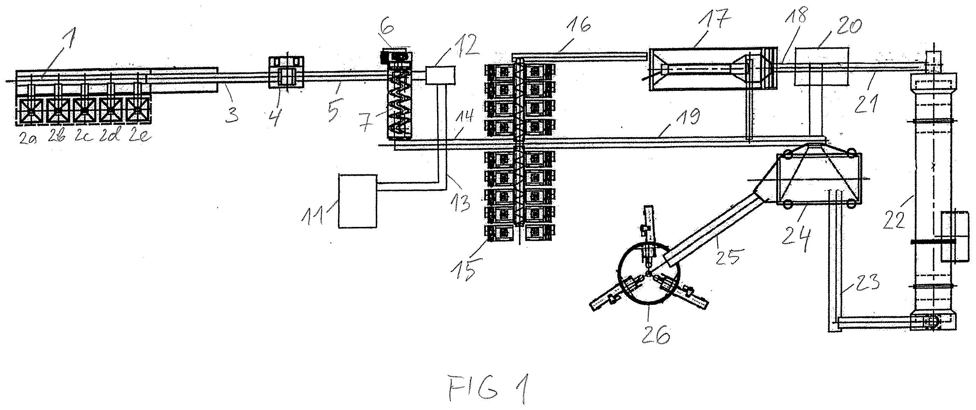

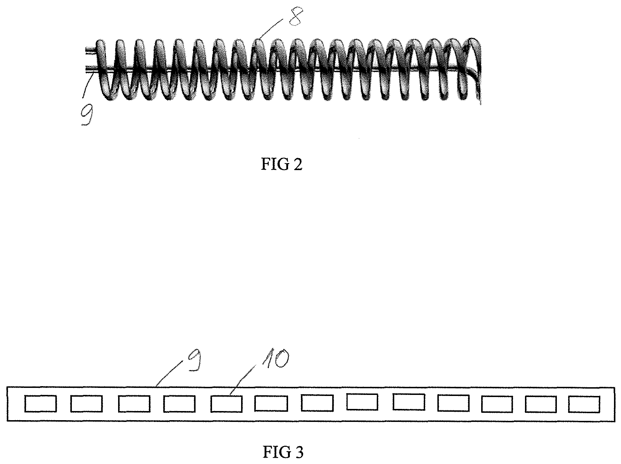

Raw materials that are unloaded from wagons, cars or other means of transport are moved to a production room for the production of granulated mineral and organic fertilizers. A belt conveyor 1 (see FIG 1) transports the raw materials to raw material hoppers 2a, 2b, 2c, 2d, 2e, and the raw materials are loaded into the respective raw material hoppers. The raw materials are intended for the production of granulated mineral and organic fertilizers, and the raw materials include, among other things, phosphate flour, potassium sulphate without chlorine, magnesium oxide, magnesite, sulphur, boron, calcium, iron, and other microelements. The components are dosed in accordance with a suitable recipe in the raw material hoppers, which are equipped with dispensing scales. The dosed components are transported to a grinder 4 along a belt conveyor 3, where the raw material components are crushed and ground. The crushed and ground components are moved to a raw material mixing machine 6, which contains four specifically shaped spirals, by means of a belt conveyor 5. Three of the spirals 7 have the same spiral increment. The three spirals all rotate at once. The mixing machine 6 is a container of stainless metal. The fourth spiral 8 (see FIG 2) is installed in the middle of the mixing machine 6. The centre part of the spiral 8 features an axial straight part 9 with airholes 10 (see FIG 3). The components in the mixing machine are aerated through the said airholes. The mixing machine 6 is in a slanted position; the angle between the central axis of the mixing machine and the horizontal level is preferably around 25-35 degrees. The diameters of the spirals 7 of the preferred embodiment of the invention are:
Width - 150 mm
The holes - length: 100 mm, width: 70 mm, the gap between them is 50 mm
The length depends on the output capacity of the mixing machine.

The diameter of the spiral 8 in the centre:
Width - 200 mm
The holes - length: 100 mm, width: 70 mm, the gap between them is 100 mm
The length depends on the output capacity of the mixing machine.

A humidifier 11 (in the form of a sprayer) and a pump dispenser 12 are connected to the mixing machine 6. A pipe 13 is added to the humidifier 11, and liquid components are added to the fertilizer components in the mixing machine by means of a pump dispenser 12. The pump dispenser 12 is constructed according to a special design, and special materials (stainless metal, polyurethane) have been used to construct the dispenser, as the working environment is aggressive due to the fertilizer components. The nozzles of the pump dispenser 12 moisturise all raw materials in the mixing machine. Belt conveyor 14 will transport the fertilizer mix into granulators 15, where the fertilizer mix is granulated and the granules are solidified. The granulators 15 are specific compactors, cartridge-type devices, which operate according to the principle of a press. They are used to crush, grind, and process the raw materials of the fertilizer mix. The granulators 15 (compactors) operate under a specific pressure. Owing to the cartridge-type construction, non-working granulators may be replaced without stopping the production of fertilizers. From the granulators 15, the granules are transported to a rotary screen 17 by means of a belt conveyor 16. The holes of the rotary screen are chosen so that granules whose diameter is 2.5-4.5 mm move forward from the rotary screen by means of a belt conveyor 18, but the remaining granules are guided to a return conveyor 19. The rotary screen is designed for separating granules by diameter. The rotary screen has two nets: one has openings of 6 × 6 mm in size, the other has openings of 10 × 10 mm. The granules are then transported to a granule rounding device 20 by means of the belt conveyor 18. The granule-rounding device 20 consists of a revolving cylinder with nets with a mesh size of 1-6 mm. The revolving cylinder of the granule-rounding device has three nets with a mesh size of 1-6 mm. The distance between the nets is 10 mm. The device has a special design - nets; airflow is directed from the front and rear of the device so that an air vortex is created, which results in proper (accurate) rounding of the granules. The rounding process is very precise thanks to the nets and directed airflow. Granules whose diameter is smaller than the predetermined diameter are transported to the return conveyor 19 from which they are moved back to the granulators 15. From the granule-rounding device 20, the granules are moved to a drier 22 by means of a belt conveyor 21. The drying process takes place at 50-100 °C depending of the type of the components. The drier 21 is a cylinder-type drier. The drying cylinder of the drier is designed to operate on different fuels. The drier may be of the heat boiler type (heated with different fuels) or of the combined heat/electric boiler type. Dried granules are transported to a vibrating screen 24 by means of a belt conveyor 23. The diameter of the granules is 2.0-4.5 mm (standard). The vibrating screen 24 is designed for sieving prepared granulated fertilizers to screen granules of the proper size. The vibrating screen is made up of the following parts: a vibratable frame, a sieve, a damper, a granule receiver with an airflow distributor. The vibrating screen 24 is made up of three nets with different meshes. The mesh sizes of the nets: 6 × 6 mm, 4 × 4 mm, 2 × 2 mm. This results in granules with a diameter of 2.0-4.5 mm. Granules of the appropriate size (2.0-4.5 mm) pass through the vibrating screen and are routed to a belt conveyor 25. Granules whose diameter is smaller than 2.0 mm are routed to the return conveyor 19. Finished products are received by a packaging machine 26, where the products are packaged according to the customer's wishes. The packaging machine is designed for packaging a wide selection of bulk and granulated goods. In a preferred embodiment of the invention, the packaging machine consists of three lines where the finished products are packaged according to the customer's wishes.

## Claims

1. A method for producing granulated mineral and organic fertilizers, which includes stages during which the components of a fertilizer are dispensed, crushed, mixed in the mixing machine, during the mixing stage, the fertilizer components are moistened by means of sprayers, granulated, wherein during the granulation stage, the fertilizer components are crushed, granulated, and solidified in granulators under a predetermined pressure, granules of a predetermined size are screened in a rotary screen, and granules that do not match the predetermined size are routed back to the granulators, the granules are rounded to predetermined dimensions in a granule rounding device, and any granules that do not match the dimensions are returned to the granulators, the granules are dried and packaged, **characterised in that** the method additionally comprises the following stages:
- component fixatives are added to the fertilizer components;
- the fertilizer components are aerated during the mixing stage by a spiral (8) in the middle of the mixing machine (6), wherein the spiral (8) having an axial, straight part (9) in the centre, which has airholes (10) in it for aerating.

2. A method for producing granulated mineral and organic fertilizers according to claim 1, wherein 1-96% of phosphate flour by weight, 1-96% of magnesium oxide by weight, 1-96% of magnesite by weight, 1-60% of bischofit by weight, 1-96% of potassium sulphate by weight, and other microelements, and 5-50 litres of water per ton are mixed for producing granulated organic fertilizers.

3. A method for producing granulated mineral and organic fertilizers according to claim 1, wherein 1-95% of phosphate flour Ca (PO₄)₂ by weight, 1-96% of magnesium oxide MgO by weight, 1-96% of magnesite MgCO₃ by weight, 1-60% of bischofit MgCl₂x6H₂O by weight, 1-60% of potassium sulphate K₂SO₄ by weight, and other microelements, 1-60% of plant-growing peat by weight, and 5-50 litres of water per ton are mixed for producing granulated organic fertilizers.

4. A method for producing granulated mineral and organic fertilizers according to claim 1, wherein an organic fertilizer with the following composition is obtained:
- a phosphorus/potassium/magnesium fertilizer (40/30/30% by mass);
- a potassium/magnesium fertilizer (50/50% by mass or 75/25% by mass or 70-30% by mass);
- a magnesium/phosphorus fertilizer (30/70% by mass or 50/50% by mass or 50/75% by mass or 70-30% by mass).

5. A method for producing granulated mineral and organic fertilizers according to claim 1, wherein 1-96% of ammonium nitrate AN by weight, 1-96% of monoammonium phosphate MAP by weight, 1-96% of diammonium phosphate DAP by weight, 1-96% of carbamide (urea) by weight, 1-96% of diammonium phosphate NPK by weight, 1-96% of sulphate monoammonium phosphate NP + S are mixed to produce a granulated mineral fertilizer.

6. A method for producing mineral and organic fertilizers according to claim 1, **characterised in that** the fertilizer granules are dried at 50-100 °C depending on the fertilizer components.

7. Equipment for the production of granulated mineral and organic fertilizers according to any of the methods as per claims 1-6, including grinder (4), mixing machine (6), granulator (15), rotary screen (17), granule rounding device (20), drier (22), vibrating screen (24), packaging machine (26), **characterised in that** the mixing machine (6) contains a total of four spirals: a) three rotating spirals with the same increment, and b) one spiral in the middle of the mixing machine, wherein the said spiral in the middle has an axial, straight part (9), which axial straight part (9) has airholes (10) in it for aerating the fertilizer components.

8. Equipment according to claim 7, **characterised in that** the mixing machine (6) is in a slanted position; the angle between the central axis of the mixing machine and the horizontal level is preferably around 25-35 degrees.

9. Equipment according to claim 7, **characterised in that** the granulators (15) have a cartridge-type design; the cartridges are independent of each other and can be removed and replaced with new ones when necessary, without stopping the production of fertilizers..

10. Equipment according to claim 7, **characterised in that** the granule rounding machine (20) consists of a cylinder, which preferably has three nets with a mesh size of 1-6 mm, the distance between the nets preferably 10 mm; airflows are created in the cylinder and directed from the front and rear part of the device so that an air vortex is created.

## Patentansprüche

1. Verfahren zur Herstellung von granulierten mineralischen und organischen Düngemitteln, das folgende Schritte einschließt: Dosieren, Zerkleinern und Vermischen der Komponenten eines Düngemittels in einer Mischmaschine, während des Mischvorgangs werden die Düngemittelkomponenten mittels Sprühgeräten befeuchtet, granuliert, wobei während des Granuliervorgangs die Düngemittelkomponenten in Granulatoren unter einem vorbestimmten Druck zerkleinert, granuliert und verfestigt werden, Granulate einer vorbestimmten Größe in einem Rotationssieb gesiebt werden und Granulate, die nicht einer vorbesteimmten Größe entsprichen, zu den Granulatoren zurückgeführt werden, die Granulate in einer Granulatrundungsvorrichtung auf vorbestimmte Abmessungen gerundet werden und Granulate, die nicht den Abmessungen entsprechen, zu den Granulatoren zurückgeführt werden, die Granulate getrocknet und verpackt werden, **dadurch gekennzeichnet, dass** das Verfahren zusätzlich die folgenden Schritte umfasst:
- den Düngemittelkomponenten werden Komponentenfixiermittel zugesetzt;
- die Düngemittelkomponenten werden während des Mischvorgangs durch eine Spirale (8) in der Mitte der Mischmaschine (6) belüftet, wobei die Spirale (8) in der Mitte einen axialen, geraden Abschnitt (9) aufweist, der Luftlöcher (10) zur Belüftung aufweist.

2. Verfahren zur Herstellung von granulierten mineralischen und organischen Düngemitteln nach Anspruch 1, wobei 1-96 Gew.-% Phosphatmehl, 1-96 Gew.-% Magnesiumoxid, 1-96 Gew.-% Magnesit, 1-60 Gew.-% Bischofit, 1-96 Gew.-% Kaliumsulfat und andere Spurenelemente sowie 5-50 Liter Wasser pro Tonne zur Herstellung von granulierten organischen Düngemitteln vermischt werden.

3. Verfahren zur Herstellung von granulierten mineralischen und organischen Düngemitteln nach Anspruch 1, wobei 1-95 Gew.-% Phosphatmehl Ca (PO₄)₂, 1-96 Gew.-% Magnesiumoxid MgO, 1-96 Gew.-% Magnesit MgCO₃, 1-60 Gew.-% Bischofit MgCl₂x6H₂O, 1-60 Gew,.-% Kaliumsulfat K₂SO₄ und andere Spurenelemente, 1-60 Gew.-% pflanzenwachstumsfördernder Torf und 5-50 Liter Wasser pro Tonne zur Herstellung von granulierten organischen Düngemitteln vermischt werden.

4. Verfahren zur Herstellung von granulierten mineralischen und organischen Düngemitteln nach Anspruch 1, wobei ein organischer Dünger mit folgender Zusammensetzung erhalten wird:
- ein Phosphor-Kalium-Magnesium-Dünger (40/30/30 % nach Masse);
- ein Kalium-Magnesium-Dünger (50/50 % nach Masse oder 75/25 % nach Masse oder 70-30 % nach Masse);
- ein Magnesium-Phosphor-Dünger (30/70 % nach Masse oder 50/50 % nach Masse oder 50/75 % nach Masse oder 70-30 % nach Masse).

5. Verfahren zur Herstellung von granulierten mineralischen und organischen Düngemitteln nach Anspruch 1, wobei 1-96 Gew.-% Ammoniumnitrat AN, 1-96 Gew.-% Monoammoniumphosphat MAP, 1-96 Gew.-% Diammoniumphosphat DAP, 1-96 Gew.-% Carbamid (Harnstoff), 1-96 Gew.-% Diammoniumphosphat NPK, 1-96 Gew.-% Sulfat-Monoammoniumphosphat NP + S vermischt werden, um einen granulierten Mineraldünger herzustellen.

6. Verfahren zur Herstellung von mineralischen und organischen Düngemitteln nach Anspruch 1, **dadurch gekennzeichnet, dass** die Düngemittelgranulate je nach Düngemittelkomponenten bei 50-100 °C getrocknet werden.

7. Ausrüstung zur Herstellung von granulierten mineralischen und organischen Düngemitteln nach einem der Verfahren gemäß den Ansprüchen 1 bis 6, umfassend ein Mahlwerk (4), eine Mischmaschine (6), einen Granulator (15), ein Rotationssieb (17), eine Granulatrundungsvorrichtung (20), einen Trockner (22), ein Vibrationssieb (24), eine Verpackungsmaschine (26), **dadurch gekennzeichnet, dass** die Mischmaschine (6) insgesamt vier Spiralen enthält: a) drei rotierende Spiralen mit gleichem Teilungsschritt und b) eine Spirale in der Mitte der Mischmaschine, wobei die Spirale in der Mitte einen axialen, geraden Abschnitt (9) aufweist und der axiale gerade Abschnitt (9) Luftlöcher (10) zur Belüftung der Düngemittelkomponenten aufweist.

8. Ausrüstung nach Anspruch 7, **dadurch gekennzeichnet, dass** die Mischmaschine (6) in geneigter Position angeordnet ist; der Winkel zwischen der Mittelachse der Mischmaschine und der Horizontalebene beträgt vorzugsweise etwa 25-35 Grad.

9. Ausrüstung nach Anspruch 7, **dadurch gekennzeichnet, dass** die Granulatoren (15) als Kartuschen ausgeführt sind; die Kartuschen sind voneinander unabhängig und können bei Bedarf entnommen und durch neue ersetzt werden, ohne dass die Düngemittelproduktion unterbrochen werden muss.

10. Ausrüstung nach Anspruch 7, **dadurch gekennzeichnet, dass** die Granulatrundungsmaschine (20) aus einem Zylinder besteht, der vorzugsweise drei Siebe mit einer Maschenweite von 1-6 mm aufweist, wobei der Abstand zwischen den Sieben vorzugsweise 10 mm beträgt; im Zylinder werden Luftströme erzeugt und von dem vorderen und hinteren Teil der Vorrichtung so geleitet, dass ein Luftwirbel entsteht.

## Revendications

1. Procédé de production d'engrais minéraux et organiques granulés, qui comprend des étages au cours desquelles les composants d'un engrais sont dosés, broyés, mélangés dans le mélangeur, au cours de l'étage de mélange, les composants de l'engrais sont humidifiés au moyen de pulvérisateurs, granulés, dans lequel, au cours de l'étage de granulation, les composants de l'engrais sont broyés, granulés et solidifiés dans des granulateurs sous une pression prédéterminée, des granulés d'une taille prédéterminée sont tamisés dans un tamis rotatif, et les granulés qui ne correspondent pas à la taille prédéterminée sont renvoyés vers les granulateurs, les granulés sont arrondis à des dimensions prédéterminées dans un dispositif d'arrondissement des granulés, et tous les granulés qui ne correspondent pas aux dimensions sont renvoyés vers les granulateurs, les granulés sont séchés et conditionnés, **caractérisé en ce que** le procédé comprend en outre les étages suivants :
- des fixateurs de composants sont ajoutés aux composants de l'engrais ;
- les composants de l'engrais sont aérés au cours de l'étage de mélange par une spirale (8) au milieu du mélangeur (6), dans lequel la spirale (8) présente une partie droite axiale (9) au centre, laquelle comporte des orifices d'air (10) pour l'aération.

2. Procédé de production d'engrais minéraux et organiques granulés selon la revendication 1, dans lequel 1-96 % en poids de farine de phosphate, 1-96 % en poids d'oxyde de magnésium, 1-96 % en poids de magnésite, 1-60 % en poids de bischofite, 1-96 % en poids de sulfate de potassium, et d'autres oligo-éléments, ainsi que 5 à 50 litres d'eau par tonne sont mélangés pour produire des engrais organiques granulés.

3. Procédé de production d'engrais minéraux et organiques granulés selon la revendication 1, dans lequel 1-95 % en poids de farine de phosphate Ca(PO₄)₂, 1-96 % en poids d'oxyde de magnésium MgO, 1-96 % en poids de magnésite MgCO₃, 1-60 % de bischofite MgCl₂x6H₂O, 1-60 % en poids de sulfate de potassium K₂SO₄, et d'autres oligo-éléments, 1-60 % en poids de tourbe de culture végétale, ainsi que 5 à 50 litres d'eau par tonne sont mélangés pour produire des engrais organiques granulés.

4. Procédé de production d'engrais minéraux et organiques granulés selon la revendication 1, dans lequel un engrais organique de la composition suivante est obtenu :
- un engrais phosphore/potassium/magnésium (40/30/30 % en masse) ;
- un engrais potassium/magnésium (50/50 % en masse ou 75/25 % en masse ou 70-30 % en masse) ;
- un engrais magnésium/phosphore (30/70 % en masse ou 50/50 % en masse ou 50/75 % en masse ou 70-30 % en masse).

5. Procédé de production d'engrais minéraux et organiques granulés selon la revendication 1, dans lequel 1-96 % en poids de nitrate d'ammonium AN, 1-96 % en poids de phosphate monoammonique MAP, 1-96 % en poids de phosphate diammonique DAP, 1-96 % en poids de carbamide (urée), 1-96 % en poids de phosphate diammonique NPK, 1-96 % de phosphate monoammonique sulfaté NP + S sont mélangés pour produire un engrais minéral granulé.

6. Procédé de production d'engrais minéraux et organiques selon la revendication 1, **caractérisé en ce que** les granulés d'engrais sont séchés à 50-100 °C en fonction des composants de l'engrais.

7. Équipement pour la production d'engrais minéraux et organiques granulés selon l'un quelconque des procédés selon les revendications 1 à 6, comprenant un broyeur (4), un mélangeur (6), un granulateur (15), un tamis rotatif (17), un dispositif d'arrondissement des granulés (20), un séchoir (22), un tamis vibrant (24), une machine de conditionnement (26), **caractérisé en ce que** le mélangeur (6) contient au total quatre spirales : a) trois spirales rotatives ayant le même pas, et b) une spirale au milieu du mélangeur, dans lequel ladite spirale au milieu présente une partie droite axiale (9), laquelle partie droite axiale (9) comporte des orifices d'air (10) pour aérer les composants de l'engrais.

8. Équipement selon la revendication 7, **caractérisé en ce que** le mélangeur (6) est en position inclinée ; l'angle entre l'axe central du mélangeur et le niveau horizontal est de préférence d'environ 25-35 degrés.

9. Équipement selon la revendication 7, **caractérisé en ce que** les granulateurs (15) présentent une conception de type cartouche ; les cartouches sont indépendantes les unes des autres et peuvent être retirées et remplacées par des neuves si nécessaire, sans arrêter la production d'engrais.

10. Équipement selon la revendication 7, **caractérisé en ce que** la machine d'arrondissement des granulés (20) est constituée d'un cylindre, qui présente de préférence trois grilles ayant une taille de maille de 1 à 6 mm, la distance entre les grilles étant de préférence de 10 mm ; des flux d'air sont créés dans le cylindre et dirigés depuis la partie avant et la partie arrière du dispositif de sorte qu'un tourbillon d'air est créé.
